Europäisches Patentamt

**European Patent Office**

**Office européen des brevets**

(11) Veröffentlichungsnummer: **0 008 769**
**A1**

(12) **EUROPÄISCHE PATENTANMELDUNG**

(21) Anmeldenummer: **79103187.5**

(22) Anmeldetag: **29.08.79**

(51) Int. Cl.³: **B 65 D 65/02**

(30) Priorität: **13.09.78 SE 7809644**

(43) Veröffentlichungstag der Anmeldung:
**19.03.80 Patentblatt 80/6**

(84) Benannte Vertragsstaaten:
**AT BE CH DE FR GB IT NL**

(71) Anmelder: **METZELER SCHAUM GMBH**
**Donaustrasse 51**
**D-8940 Memmingen(DE)**

(72) Erfinder: **Karlstroem, Anders**
**Grevgatan 68**
**S-114 59 Stockholm(SE)**

(72) Erfinder: **Eriksson, Anders**
**Solhoejdsvägen 5**
**S-132 00 Saltsjoe-Boo(SE)**

(74) Vertreter: **Michelis, Theodor, Dipl.-Ing.**
**Westendstrasse 131**
**D-8000 München 2(DE)**

(54) **Quaderförmige Isolierhaube aus flexiblem Material.**

(57) Die Erfindung betrifft eine quaderförmige Isolierhaube, die von oben beispielsweise auf eine Transportpalette aufgesetzt wird. Die vier Seitenwände und das Dach bestehen aus einer äußeren und einer inneren Schicht aus Vinylkunststoff mit einer Isolier-Zwischenschicht aus flexiblem Schaumstoff. Vorder- und Rückwand sowie Dach sind mit den beiden Seitenwänden über durchgehende Reißverschlüsse lösbar verbunden, wobei die Trennstellen hinter den Reißverschlüssen durch übergreifende Dichtlaschen abgedichtet sind.

Fig. 1

EP 0 008 769 A1

0008769

METZELER SCHAUM GmbH     -1-     München, 07.08.79
                                  unser Zeichen: MS 140 P 78

<u>Quaderförmige Isolierhaube aus flexiblem Material</u>

Die Erfindung betrifft eine quaderförmige Isolierhaube aus flexiblem Material, das mehrschichtig mit einer äußeren und einer inneren Kunststoff-Folie und einer dazwischenliegenden Isolierschicht aus einem elastischen Schaumstoff aufgebaut ist, wobei die Isolierhaube auf eine die zu schützenden Güter aufnehmende Transportpalette aufsteckbar ist und mindestens eine durch Reißverschlüsse öffenbare Seitenwand aufweist.

Wärme-und kälteisolierende Vorrichtungen sind in vielfältigen Ausführungen bekannt. So gibt es beispielsweise starre Kühlkästen, die jedoch den Nachteil haben, daß sie sehr sperrig sind und beim Rücktransport im leeren Zustand sehr viel Platz benötigen. Weiterhin sind kleine Isolierhauben bekannt, die beispielsweise mit Watte oder Schaumstoff gefüllt sind und verwendet werden, um kleinere Kochgefäße oder Kannen von der Umgebungsluft für einen gewissen Zeitraum zu isolieren. Eine derartige weiche Isolierhaube hat den großen Vorteil, daß sie zusammengelegt werden kann und daher bei der Nichtverwendung nur wenig Platz einnimmt. Wenn man eine derartige Haube in größeren Ausmaßen verwendet, um beispielsweise auf einer Transportpalette gestapelte Güter, wie beispielsweise Milch, Butter oder Fleisch, zu isolieren, so hat eine derartige Haube den Nachteil, daß sie von der Transportpalette und den zu schützenden Gütern abgehoben bzw. darübergezogen werden muß, was bei einer größeren Stapelhöhe sehr umständlich ist.

Der Erfindung liegt daher die Aufgabe zugrunde, eine Isolierhaube zu schaffen, die einerseits leicht gefüllt und die andererseits im nicht benutzten Zustand einfach und auf kleinen Raum zusammengefaltet und transportiert werden kann und die draüber hinaus optimale Isoliereigenschaften aufweist.

Zur Lösung dieser Aufgabe ist erfindungsgemäß vorgesehen, daß zwei einander gegenüberliegende Seitenwände und der dazwischenliegende Dachabschnitt der Isolierhaube eine zusammenhängende Einheit darstellen und durch seitliche, durchgehende Reißverschlüsse mit den beiden anderen Seitenwänden lösbar verbunden sind und daß die Trennstellen im Bereich der Reißverschlüsse durch innenliegende, übergreifende Dichtlaschen abgedichtet sind.

Weitere zweckmäßige Ausgestaltungen der Erfindung sind in den Unteransprüchen genannt.

Anhand einer schematischen Zeichnung sind Aufbau und Wirkungsweise eines Ausführungsbeispiels nach der Erfindung näher erläutert. Dabei zeigen

Fig. 1 eine auf eine Transportpalette aufgesetzte Isolierhaube in perspektivischer Ansicht mit teilweisem Schnitt,
Fig. 2 einen Teilquerschnitt entsprechend der Schnittlinie II-II im Bereich eines Reißverschlusses nach Fig. 1,
Fig. 3 eine Draufsicht auf die Isolierhaube nach Fig. 1 und
Fig. 4 einen Teilquerschnitt entsprechend der Schnittlinie IV-IV nach Fig. 1.

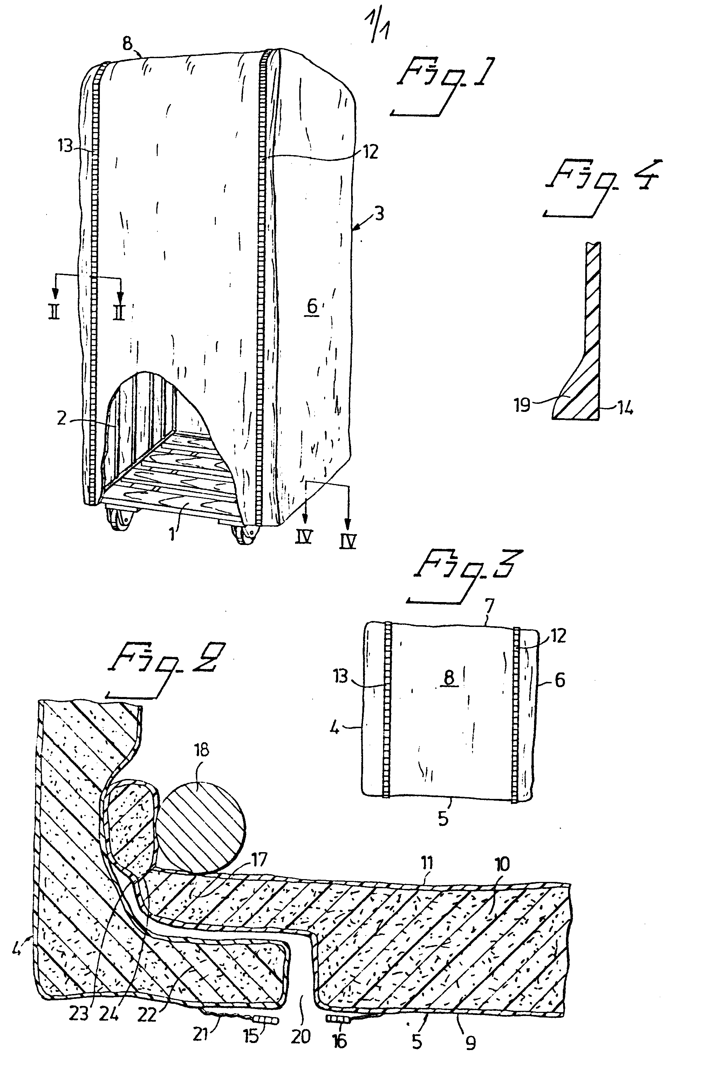

Wie aus Fig. 1 zu ersehen ist, ist auf eine rechteckige Transportpalette 1 auf zwei gegenüberliegenden Seiten ein Ständer 2 aus einzelnen Streben lösbar aufgesetzt. Die darübergezogene Isolierhaube 3 umfaßt die vier im wesentlichen rechteckigen Seitenwände 4, 5, 6 und 7 sowie ein rechteckiges Dach 8.

Wie insbesondere aus Fig. 2 hervorgeht, besteht diese Isolierhaube aus einer äußeren Kunststoff-Folie 9, wie beispielsweise bewehrtem Vinylkunststoff, einer inneren Schicht 10 aus wärmeisolierendem Material, wie beispielsweise einem elastischen Schaumstoff sowie einer inneren Kunststoff-Folie 11 aud dem gleichen Material wie die Außenschicht 9. Die beiden Außenschichten 9 und 11 sind dann an den Kanten durch Schweißen oder durch Nähte miteinander verbunden.

Um diese Isolierhaube leicht füllen und entleeren zu können und um sie im nicht benutzten Zustand einfach zusammenzufalten und zu transportieren, ist sie mit zwei durchgehenden Reißverschlüssen 12 und 13 versehen. Jeder Reißverschluß 12 bzw. 13 erstreckt sich dabei von der unteren Kante 14 der Isolierhaube entlang der vorderen Seitenwand 5 über das Dach und die hintere Seitenwand 7 wieder bis zur Unterkante 14. Die Reißverschlüsse 12 und 12 liegen dabei so nahe an den an die beiden Seitenwände 5 und 7 anschließenden festen Seitenwände 4 und 6, wie dies praktisch möglich ist, um eine möglichst große Öffnung zu erhalten, wenn die Reißverschlüsse 12 und 13 an der Frontseite 5 der Isolierhaube 3 geöffnet werden, so daß diese Frontseite 5 auf das Dach 8 hochgebogen und dort aufgelegt werden kann, um einen Teil des Transportgutes zu entnehmen.

Wenn die Isolierhaube 3 im leeren Zustand zurücktransportiert werden soll, werden die beiden Reißverschlüsse 12 und 13 ganz geöffnet, so daß die Haube in drei Teile zerfällt, und zwar in die linke Seitenwand 4 mit der daranhängenden Reißverschlußhälfte 15 (siehe Fig. 2), den Mittelteil mit den Seitenwänden 5 und 7 sowie das Dach 8 und die beiden Reißverschlußteile 16 sowie die rechte Seitenwand 6 mit der entsprechenden Reißverschlußhälfte. Die zusammenhängende Einheit 5, 8, 7 kann dann zu derselben Größe wie die Seitenwände 4 und 6 zusammengefaltet werden, so daß man ein dünnes und flaches, leicht transportfähiges Paket erhält.

Um bei geschlossener Isolierhaube ein Entweichen oder ein Eindringen von Luft und damit eine Verschlechterung der Isolationswirkung zu vermeiden, sind - wie insbesondere aus dem Querschnitt nach Fig. 2 zu ersehen ist - die Reißverschlüsse durch eine innenliegende Dichtlasche 17 abgedichtet, die sich entlang der Längskanten der Seitenwände 5 und 7 und der Dachkanten 8 erstrecken. Diese Dichtlasche 17 kann dabei zweckmäßigerweise die halbe Wandstärke der übrigen Isolierhaube und eine solche Länge aufweisen, daß sie zwischen der angrenzenden festen Seitenwand 4 bzw. 6 und einer Strebe 18 des Ständers 2 hindurchgeschoben und dort eingeklemmt werden kann. Da das Material der Isolierhaube in den Wänden und in dieser Dichtlasche sehr flexibel ist, kann es soweit zusammengedrückt werden, daß die Dichtlaschen an den Streben 18 und den anschließenden Seitenwänden 4 bzw. 7 dichtend und federnd anliegen.

Damit bildet diese Isolierhaube, obwohl sie aus drei voneinander lösbaren Stücken besteht, eine vollständige, leckfreie Einheit. Die Gefahr von Leckagen an den Kanten der Transportpalette 1 kann dadurch beseitigt werden, daß die untere Kante sämtlicher Seitenwände mit einem verdickten elastischen Flansch 19 ausgebildet ist - wie das aus Fig. 4 zu ersehen ist - die dann gegen die Seitenkanten der Transportpalette 1 gepreßt werden und dort dichtend anliegen.

Um darüber hinaus zu vermeiden, daß ein Spalt 20 unter den Reißverschlüssen 12 bzw. 13 entsteht, kann zweckmäßigerweise wenigstens eine der Reißverschlußhälften, beispielsweise die Reißverschlußhälfte 15 nach Fig. 2, durch ein elastisches Band 21 mit der Außenschicht 9 der Seitenwand 4 verbunden sein. Durch Dehnung dieses Bandes 21 wird beim Schließen des Reißverschlusses auf den Wandabschnitt 22 eine Spannkraft aufgebracht, die zusätzlich ein Abdichten des Spaltes 20 bewirkt. Selbstverständlich können auch beide Reißverschlußhälften an einem solchen elastischen Band 21 befestigt werden.

Um die Dichtlaschen 17 leichter hinter die Strebe 18 des Ständers 2 einklemmen zu können, ist es zweckmäßig, wenn sie entlang ihrer gesamten Länge eine gelenkartige Einschnürung 23 aufweist, um ein leichteres Umbiegen zu ermöglichen. Dies kann durch eine Naht 24 erreicht werden, wodurch die beiden Außenschichten 9 und 11 direkt aufeinander zu liegen kommen.

Die Transportpalette 1 wird zweckmäßigerweise noch mit einer Boden platte aus beispielsweise Polymethan versehen, um ein Entweichen von Luft nach unten zu verhindern.

Die beschriebene erfindungsgemäße Isolierhaube ist vorstehend am Beispiel einer Transportpalette beschrieben. Selbstverständlich kann sie auch auf jeder anderen Art von Lastträgern, wie beispiels

-5-

weise der Ladefläche eines Lastwagens oder eines Schiffes oder anderer Transportmittel direkt befestigt werden.

Patentansprüche

1. Quaderförmige Isolierhaube aus flexiblem Material, das mehrschichtig mit einer äußeren und einer inneren Kunststoff-Folie und einer dazwischenliegenden Isolierschicht aus einem elastischen Schaumstoff aufgebaut ist, wobei die Isolierhaube auf eine die zu schützenden Güter aufnehmende Transportpalette aufsteckbar ist und mindestens eine durch Reißverschlüsse öffenbare Seitenwand aufweist, d a d u r c h g e k e n n z e i c h n e t , daß zwei einander gegenüberliegende Seitenwände (5, 7) und der dazwischenliegende Dachabschnitt (8) eine zusammenhängende Einheit darstellen und durch seitliche, durchgehende Reißverschlüsse (12, 13) mit den beiden anderen Seitenwänden (4, 6) lösbar verbunden sind, und daß die Trennstellen (20) im Bereich der Reißverschlüsse (12, 13) durch innenliegende, übergreifende Dichtlaschen (17) abgedichtet sind.

2. Isolierhaube nach Anspruch 1, dadurch gekennzeichnet, daß die innenliegenden, seitlich an die zusammenhängende Einheit (5, 7, 13) angesetzten Dichtlaschen (17) klemmend zwischen der feststehenden Seitenwand (4, 6) und einer Strebe (18) des Transportpaletten-Stützgerüstes (2) festlegbar sind.

3. Isolierhaube nach Anspruch 2, dadurch gekennzeichnet, daß die Dichtlaschen (17) eine sich über ihre gesamte Länge erstreckende gelenkartige Einschnürung (23) aufweisen.

4. Isolierhaube nach Anspruch 1 oder 2, dadurch gekennzeichnet, daß mindestens eine der beiden einen Reißverschluß (12, 13) bildenden Reißverschlußhälften (15, 16) über einen elastischen Streifen (21) mit der jeweiligen Isolierhaubenwand (4; 5; 6; 7) verbunden ist.

5. Isolierhaube nach Anspruch 1 bis 4, dadurch gekennzeichnet, daß die unteren, an der Transportpalette (1) festgelegten Kanten (14) der Isolierhaubenseitenwände (4 bis 7) nach innen ragende Dichtungsflansche (19) aufweisen.

1/1

Fig.1

Fig.4

Fig.3

Fig.2

0008769

Nummer der Anmeldung

EP 79103187.5

**Europäisches Patentamt**

# EUROPÄISCHER RECHERCHENBERICHT

| | EINSCHLÄGIGE DOKUMENTE | | KLASSIFIKATION DER ANMELDUNG (Int.Cl.) 3 |
|---|---|---|---|
| Kategorie | Kennzeichnung des Dokuments mit Angabe, soweit erforderlich, der maßgeblichen Teile | betrifft Anspruch | |
| X | DE - B2 - 1 786 205 (LINDE AG)<br><br>---- | 1 | B 65 D 65/02 |

**RECHERCHIERTE SACHGEBIETE (Int. Cl.) 3**

B 65 D 65/00
B 65 D 19/00
F 25 D 11/00
F 25 D 23/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 13-11-1979 | JANC |

EPA form 1503.1   06.78